# DEMANDE DE BREVET EUROPEEN

(11) **EP 1 445 168 A1**
(43) Date de publication de la demande: **11.08.2004**
(21) Numéro de dépôt: 04290186.8
(22) Date de dépôt: 23.01.2004
(51) Int. Cl.: B62D 1/18

(54) **Dispositif de blocage vertical d'une colonne de direction de véhicule automobile**

(30) Priorité: 10.02.2003 FR 0301576
(71) Demandeur: NACAM France S.A., F-41100 Vendôme (FR)
(72) Inventeur: Gauchenot, Benjamin, 41000 Blois (FR); Sauquet, Mickael, 41100 Saint Ouen (FR)
(74) Mandataire: Cabinet Martinet & Lapoux

(57) **Abrégé**

Dispositif de blocage vertical d'une colonne de direction réglable de véhicule automobile, comportant un tube-corps (2) relié à un montant (11) fixe. Un système de serrage (4) comporte une tige de serrage (7) sur laquelle sont montés une came fixe (21) et une came mobile (22) munie d'une poignée de manoeuvre (27). Une crémaillère fixe (41) est agencée sur une aile (12) du montant (11), et elle est disposée face à une crémaillère mobile (42) articulée dans la came fixe (21). Un ressort (52) monté sur la came fixe (21) agit sur la crémaillère mobile (42) pour l'engagement des crémaillères.

La crémaillère mobile 42 a deux positions, données par l'action de la came mobile (22) sur ladite crémaillère mobile (42), blocage avec engagement et libre avec dégagement.

## Description

La présente invention se rapporte à un dispositif de blocage vertical d'une colonne de direction de véhicule automobile.

La colonne de direction est réglable en hauteur ou est réglable en hauteur et en profondeur.

Il existe de nombreux dispositifs de maintien en position de colonne de direction réglable, en particulier ceux faisant appel à des systèmes à crémaillère ou à encoches coopérant avec un tenon. Dans le peu de place impartie aux colonnes de direction, ces dispositifs sont relativement encombrants surtout dans le cas des petits véhicules.

Le but de la présente invention est de proposer une colonne de direction de véhicule automobile, réglable en hauteur ou en hauteur et en profondeur, qui est munie d'un dispositif de blocage vertical garantissant le maintien de la position verticale notamment en cas de choc, tout en s'intégrant dans l'encombrement existant, et ceci quelle que soit la position relative des différents élément en position verrouillée tout en ayant aucune influence sur l'effort de manoeuvre pour ledit verrouillage.

Selon l'invention, le dispositif de blocage vertical s'applique à une colonne de direction de véhicule automobile. La colonne de direction est constituée par un arbre de direction monté tournant autour d'un axe de direction dans un tube-corps, qui est relié à un ensemble support fixé à la structure du véhicule. Ladite colonne de direction étant réglable en hauteur ou en hauteur et en profondeur, avec un système de serrage suivant un axe de serrage, qui est sensiblement perpendiculaire au plan vertical passant par l'axe de direction.

Le système de serrage comporte une tige de serrage sur laquelle sont montés un élément de tenue axiale à chaque extrémité et un ensemble de blocage muni d'une poignée de manoeuvre. L'ensemble support comporte au moins un montant sensiblement parallèle au plan vertical, le tube-corps et l'élément de tenue axiale correspondant étant disposés du même côté du montant, l'ensemble de blocage, la poignée de manoeuvre et l'élément de tenue axiale correspondant étant disposés de l'autre côté du montant.

L'ensemble de blocage comporte, par rapport à l'axe de serrage, un élément fixe et un élément mobile en rotation. Ledit élément fixe est disposé contre une face externe du montant et il coopère par sa face transversale externe avec la face transversale interne dudit élément mobile, qui est solidaire en rotation avec la poignée de manoeuvre sur laquelle s'applique l'élément de tenue axiale correspondant.

Une crémaillère fixe est agencée sur une aile du montant, ladite aile étant sensiblement verticale et perpendiculaire audit montant. Une crémaillère mobile est disposée face à la crémaillère fixe et elle est reliée à l'élément fixe de l'ensemble de blocage.

La crémaillère mobile a deux positions : une position de blocage dans laquelle la crémaillère mobile est engagée dans la crémaillère fixe, lorsque le système de serrage est en position verrouillée, et une position libre dans laquelle la crémaillère mobile est dégagée de la crémaillère fixe, lorsque le système de serrage est en position déverrouillée.

Les deux positions de la crémaillère mobile sont données par l'action de l'élément mobile de l'ensemble de blocage sur ladite crémaillère mobile. De plus, un élément élastique est monté sur l'élément fixe de l'ensemble de blocage, et il s'applique sur la crémaillère mobile suivant le sens de la pénétration dans la crémaillère fixe.

Selon un mode de réalisation de l'invention, la crémaillère mobile est montée sur l'élément fixe de blocage, qui est une came fixe liée au montant de l'ensemble support. La came fixe comporte à sa périphérie un logement cylindrique d'articulation de la crémaillère mobile.

La crémaillère mobile est munie d'un bras, qui est poussé par un doigt agencé à la périphérie de l'élément mobile de blocage, qui est une came mobile, de façon à assurer le déverrouillage en dégageant la crémaillère mobile de la crémaillère fixe, lorsque la poignée de manoeuvre est placée en position déverrouillée.

L'élément élastique est constitué par un ressort, qui est monté autour de l'articulation de la crémaillère mobile et prend appui sur l'élément fixe de blocage, de manière à engager la crémaillère mobile dans la crémaillère fixe lorsque la poignée de manoeuvre est mise en position verrouillée, et à équilibrer l'action du doigt sur le bras en position déverrouillée.

Avantageusement, la crémaillère mobile est constituée par un corps qui est muni à une de ses extrémités d'une portion dentée, avec des dents agencées pour coopérer avec des dents agencées sur la crémaillère fixe, et à l'autre extrémité d'un élément d'articulation, qui est agencé pour pivoter dans le logement cylindrique d'articulation appartenant à la came fixe et qui porte le bras de dégagement de la crémaillère mobile. Ledit élément d'articulation est constitué par une portion cylindrique prolongeant ledit corps de la crémaillère mobile.

Le logement cylindrique d'articulation appartenant à la came fixe est constitué par une portion cylindrique dépassant cent quatre vingt degrés avec deux entrées recourbées, de manière à maintenir verticalement ladite crémaillère mobile.

Selon l'invention, le ressort peut être réalisé de deux manières. Selon une première réalisation, le ressort est constitué par un ensemble de spires qui est monté sur un pivot, agencé à une des extrémités axiales de la portion cylindrique de la crémaillère mobile. Le pivot, la portion cylindrique et le logement cylindrique de la came fixe ont le même axe qui est l'axe d'articulation. L'ensemble des spires a une de ses extrémités, qui est constituée par un prolongement avec un bout recourbé, qui s'engage dans un logement aménagé dans la came fixe pour bloquer ledit prolongement, qui se loge dans une rainure de la came fixe. L'ensemble des spires a l'autre extrémité, qui est constituée par un prolongement avec une portion verticale, une portion axiale et un bout recourbé qui vient s'appliquer, de l'autre côté du pivot, contre la crémaillère mobile, qui est munie d'une rainure dans laquelle se loge la portion axiale dudit prolongement.

Selon une deuxième réalisation, le ressort est constitué par une tôle élastique conformée suivant les figures correspondantes.

Ledit ressort comporte une portion circulaire agencée de manière à être disposée entre le logement cylindrique d'articulation, appartenant à la came fixe, et la portion cylindrique de la crémaillère mobile. Ladite portion circulaire a une de ses extrémités qui est constituée par un prolongement qui épouse et s'applique contre une face externe de la came fixe, avec un élément latéral recourbé qui s'applique contre ladite came fixe du côté du montant pour le maintien dudit ressort. Ladite portion circulaire a l'autre extrémité qui est constituée par une portion centrale avec un prolongement recourbé agencé pour s'appliquer contre la crémaillère mobile, et avec un élément latéral recourbé qui s'applique contre ladite crémaillère mobile pour son maintien axial.

Avantageusement, la crémaillère fixe peut être réalisée sur l'aile du montant, ou elle peut être montée sur l'aile du montant avec des moyens d'assemblage. De plus, la came fixe, la came mobile, la crémaillère fixe et la crémaillère mobile peuvent être réalisées en matière plastique ou en acier fritté.

Le dispositif de blocage vertical d'une colonne de direction selon l'invention présente ainsi l'avantage de garantir le maintien vertical de la position choisie, même dans le cas d'un positionnement des crémaillères fixe et mobile avec les sommets de leurs dents les uns en face des autres. Un effort vertical va engendrer un glissement vertical d'une demie dent, et le ressort permet aux deux crémaillères de s'engrener et de stopper le déplacement vertical de la colonne de direction. Dans cette position de verrouillage, l'effort de manoeuvre pour ledit verrouillage est inchangé. De plus, le dispositif de blocage vertical de l'invention s'aménage dans l'encombrement existant en utilisant les éléments principaux du système de serrage, ce qui entraîne un coût de fabrication réduit.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue éclatée en perspective du dispositif de blocage vertical d'une colonne de direction selon l'invention ;
- la figure 2 est une vue partielle selon l'axe de serrage de la came fixe et de la crémaillère mobile représentées sur la figure 1 ;
- la figure 3 est une coupe partielle de l'accrochage du ressort dans la came fixe correspondant à la figure 1 ;
- la figure 4 est une coupe transversale de la colonne de direction passant par l'axe de serrage et correspondant au dispositif de la figure 1 ;
- la figure 5 est une vue suivant V de la figure 4, le système de serrage étant en position verrouillée ;
- la figure 6 est une vue analogue de la figure 5, le système de serrage étant en position déverrouillée ;
- la figure 7 est une vue en perspective d'un autre mode de réalisation du ressort ;
- la figure 8 est une vue suivant VIII de la figure 7 ;
- la figure 9 est une vue partielle analogue à la figure 2 du montage du ressort de la figure 8 ;
- la figure 10 est une vue en perspective de la crémaillère mobile ;
- la figure 11 est une vue partielle en perspective d'un autre mode de réalisation de la crémaillère fixe.

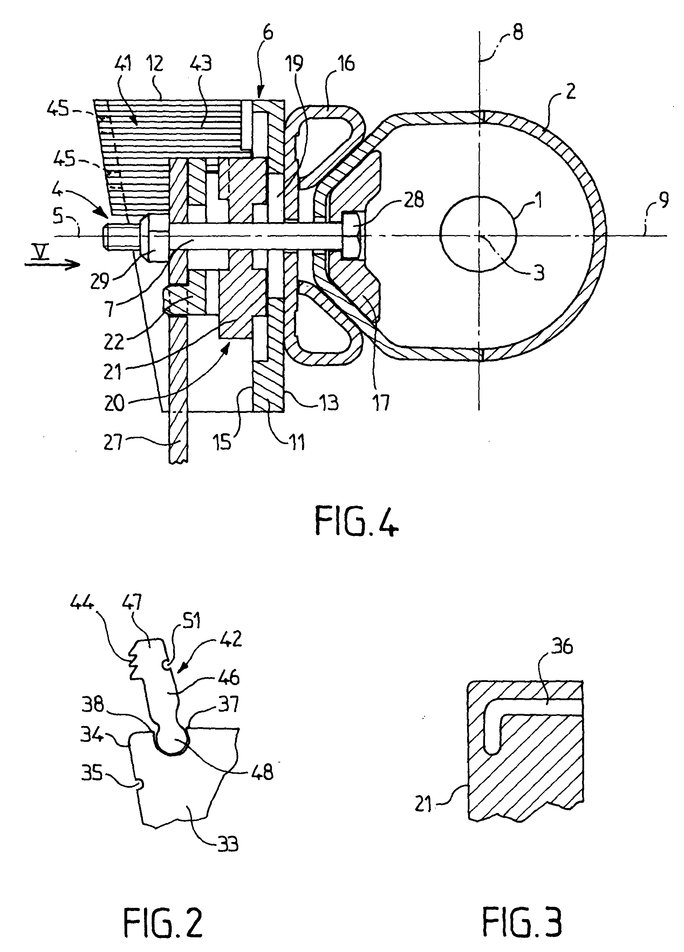

Comme cela est représenté sur les figures 4, 5 et 6, l'invention se rapporte à un dispositif de blocage vertical d'une colonne de direction réglable d'un véhicule automobile. La colonne de direction comprend un arbre de direction 1, qui est monté tournant dans un tube-corps 2 autour d'un axe de direction 3. Ledit tube corps 2 est relié à un ensemble support 6, qui est fixé à la structure du véhicule. La colonne de direction est réglable en hauteur, ou en hauteur et en profondeur.

Le tube-corps 2 est relié à l'ensemble support 6 par un système de réglage en position en hauteur ou en hauteur et en profondeur.

La colonne de direction comporte un système de serrage 4, qui permet d'avoir la position verrouillée et la position déverrouillée de ladite colonne de direction.

Le système de serrage 4 est disposé et agit suivant un axe de serrage 5, qui est sensiblement perpendiculaire au plan vertical 8 passant par l'axe de direction 3.

L'ensemble support 6 comporte au moins un montant 11 qui est sensiblement parallèles au plan vertical 8 passant par l'axe de direction 3.

Dans la suite de la description et pour un même élément, on appellera interne ou intérieur par rapport à l'axe de direction 3 ou par rapport au plan vertical 8, ce qui est le plus près de cet axe de direction 3 ou de ce plan vertical 8, et externe ou extérieur ce qui est le plus éloigné.

Ainsi, le montant latéral 11 a une face interne 13 et une face externe 15 par rapport à l'axe de direction 3, ou par rapport au plan vertical 8. La face interne 13 et la face externe 15 sont sensiblement parallèles au plan vertical 8.

De plus, le montant 11 possède un trou oblong 19 qui est orienté dans le sens du réglage en hauteur du système de réglage en position.

Le dispositif de réglage en position est bloqué à la position choisie par le système de serrage 4. L'axe de serrage 5 est également sensiblement perpendiculaire au montant latéral 11 de l'ensemble support 6. Le dispositif de serrage a deux positions : une position déverrouillée dans laquelle le dispositif de serrage est débloqué pour permettre le réglage demandé de la colonne de direction, et une position verrouillée dans laquelle le dispositif de serrage est bloqué pour garantir le maintien de la position choisie.

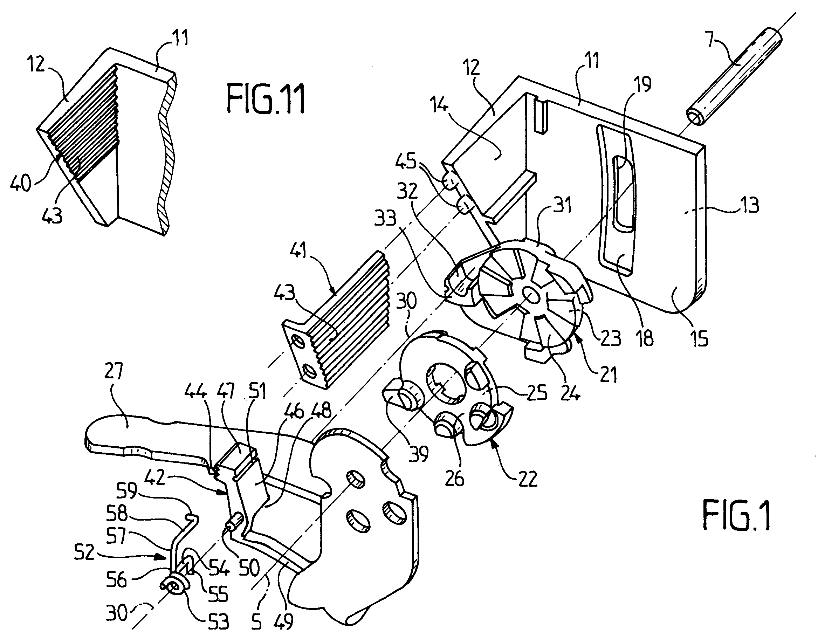

Dans le mode de réalisation de l'invention représenté notamment sur les figures 1 et 4, l'axe de serrage 5 traverse le tube-corps 2 au voisinage de l'axe de direction 3. Le plan, passant par l'axe de serrage 5 et l'axe de direction 3, est appelé plan de serrage 9 ; ce plan de serrage 9 est sensiblement perpendiculaire au plan vertical 8.

Le système de serrage 4 comporte une tige de serrage 7, dont l'axe est l'axe de serrage 5. Sur la tige de serrage 7 sont montés un ensemble de blocage 20, une poignée de manoeuvre 27, ainsi qu'un élément de tenue axiale 28 disposé à son extrémité interne et un élément de tenue axiale 29 disposé à son extrémité externe.

Le tube-corps 2 et l'élément de tenue axiale 28 correspondant sont disposés du côté de la face interne 13 du montant 11. L'ensemble de blocage 20, la poignée de manoeuvre 27 et l'élément de tenue axiale 29 correspondant sont disposés du côté de la face externe 15 du montant 11.

Dans le mode de réalisation représenté sur la figure 4, l'élément de tenue axiale 28 est constitué par une tête de serrage.

La tige de serrage 7 a son extrémité externe qui est filetés afin de recevoir l'élément de tenue axiale 29 constitué par un écrou de serrage.

Un élément d'appui 16 est monté sur la tige de serrage 7, et il est disposé entre la face interne 13 du montant 11 et le tube-corps 2. L'élément d'appui 16 est muni de deux faces inclinées disposées de part et d'autre du plan de serrage 9 et coopérant avec deux faces inclinées du tube-corps 2, de manière à assurer l'antirotation. La tête de serrage 28 s'applique à l'intérieur du tube-corps 2 par l'intermédiaire d'une équerre de serrage 17 montée sur la tige de serrage 7.

Le dispositif de l'invention s'applique également à un tube-corps 2 disposé entre deux montants verticaux de l'ensemble support 6. Dans ce cas, le tube-corps est muni d'un carré renfort, qui est traversé par la tige de serrage dont l'axe de serrage est décalé par rapport à l'axe de direction 3, et dont l'élément de tenue axiale 28 est toujours disposé du côté de face interne 13, mais à l'extérieur de l'autre montant.

Par rapport à l'axe de serrage 4, l'ensemble de blocage 20 comporte un élément fixe et un élément mobile en rotation. L'élément fixe est constitué par une came fixe 21, et l'élément mobile est constitué par une came mobile 22. La face transversale interne 23 de la came fixe 21 est disposée contre la face externe 15 du montant 11. La face transversale interne 23 est munie d'un tenon 31 qui s'engage dans une rainure 18 du montant 11, afin d'immobiliser en rotation la came fixe 21. La rainure 18 a le même axe que le trou oblong 19 qui assure le passage de la tige de serrage 7.

La came fixe 21 a une face transversale externe 24 qui coopère avec une face transversale interne 25 de la came mobile 22, de manière à donner le serrage nécessaire en position verrouillée. La came mobile 22 est solidaire en rotation avec la poignée de manoeuvre 27 qui est montée contre la face transversale externe 26 de ladite came mobile 22.

L'élément de tenue axiale constitué par l'écrou de serrage 29 s'applique sur la poignée de manoeuvre 27.

Selon l'invention, le montant 11 est muni d'une aile 12 qui est sensiblement verticale et perpendiculaire audit montant 11, avec une crémaillère fixe qui coopère avec une crémaillère mobile afin d'assurer le blocage vertical de la colonne de direction lorsqu'elle est en position verrouillée.

La crémaillère fixe est réalisée soit sous la forme d'une crémaillère fixe 40 intégrée à l'aile 12 du montant 11, soit sous la forme d'une crémaillère fixe 41 rapportée. La crémaillère fixe 40 est réalisée directement sur l'aile 12, comme cela est représenté sur la figure 11.

La crémaillère fixe 41 rapportée est représentée sur la figures 1 et 4. Dans ce cas, la crémaillère fixe 41 est montée sur l'aile 12 avec des moyens d'assemblage 45, constitués par deux tenons de l'aile 12 pénétrant dans deux trous correspondant de la crémaillère fixe 41.

La crémaillère mobile 42 est reliée à la came fixe 21 de l'ensemble de blocage 20 en étant montée et en s'articulant dans ladite came fixe 21. La crémaillère mobile 42 est disposée en face de la crémaillère fixe 40 ou 41.

Un élément élastique 52 ou 60 est monté sur la came fixe 21 de l'ensemble de blocage 20 et il s'applique sur la crémaillère mobile 42 dans le sens de la pénétration de ladite crémaillère mobile 42 dans la crémaillère fixe 40 ou 41.

La crémaillère mobile 42 a deux positions :
. une position de blocage dans laquelle la crémaillère mobile 42 est engagée dans la crémaillère fixe 40 ou 41, lorsque le système de serrage 4 est en position verrouillée,
. une position libre dans laquelle la crémaillère mobile 42 est dégagée de la crémaillère fixe 40 ou 41, lorsque le système de serrage 4 est en position déverrouillée.

Les deux positions de la crémaillère mobile 42 sont données par l'action de la came mobile 22 de l'ensemble de blocage 20 sur ladite crémaillère mobile 42.

Un support 33 est agencé à la périphérie de la came fixe 21. La crémaillère mobile 43 est montée et s'articule dans le support 33, qui comporte un logement cylindrique d'articulation 32 de la crémaillère mobile 42 avec un axe d'articulation 30. Le logement cylindrique d'articulation 32 est constitué par une portion cylindrique dépassant cent quatre vingt degrés, de manière à avoir deux entrées recourbées 37 et 38 pour maintenir verticalement la crémaillère mobile 42.

De plus, le support 33 comporte un logement coudé 36, représenté sur la figure 3, qui est destiné à l'accrochage de l'élément élastique 52. Enfin, une rainure 35, parallèle à l'axe d'articulation 30, est aménagée dans une face externe 34 du support 33 représentée sur la figure 2. La came mobile 22 est munie d'un doigt 39 agencé à la périphérie et destiné au dégagement de la crémaillère mobile 42, lorsque le système de serrage 4 est en position déverrouillée.

La crémaillère mobile 42, représentée sur les figures 1, 2 et 10, est constituée d'un corps 46. Ledit corps 46 est muni à une de ses extrémités, d'une portion dentée 47 avec des dents 44, qui sont agencées pour coopérer avec des dents 43 agencées sur la crémaillère fixe 40 ou 41. Ledit corps 46 est muni, à l'autre extrémité, d'un élément d'articulation 48 qui est agencé pour être monté et pivoter dans le logement cylindrique d'articulation 32 de la came fixe 21. L'élément d'articulation 48 porte un bras de dégagement 49, qui est poussé par le doigt 39 de came mobile 22 lorsque la poignée de manoeuvre 27 est placée en position déverrouillée, de façon à dégager la crémaillère mobile 42 de la crémaillère fixe 40 ou 41. L'élément d'articulation 48 est constitué par une portion cylindrique, qui prolonge le corps 46.

Tout en restant dans le cadre de l'invention, la came fixe 21, la came mobile 22, la crémaillère fixe 41 et la crémaillère mobile 42 peuvent être réalisées en matière plastique ou en acier fritté.

L'élément élastique 52 ou 60 est monté autour de l'articulation de la crémaillère mobile 42 et prend appui sur la came fixe 21 de manière :
. à engager la crémaillère mobile 42 dans la crémaillère fixe 40 ou 41 lorsque la poignée de manoeuvre 27 est mise en position verrouillée,
. à équilibrer l'action du doigt 39 sur le bras 49 en position déverrouillée.

L'élément élastique représenté sur la fiugre 1 est un ressort 52.

Le ressort 52 est constitué par un ensemble de spires 53 qui est monté sur un pivot 50 agencé à une des extrémités axiales de la portion cylindrique 48 de la crémaillère mobile 42. Le pivot 50, la portion cylindrique 48 et le logement cylindrique 32 de la came fixe 21 ont le même axe qui est l'axe d'articulation 30.

L'ensemble des spires 53 a une de ses extrémités, qui est constituée par un prolongement 54 avec un bout recourbé 55, qui s'engage dans un logement 36 aménagé dans la came fixe 21 pour bloquer ledit prolongement 54, qui se loge dans une rainure 35 de la came fixe 21.

L'ensemble des spires 53 a l'autre extrémité qui est constituée par un prolongement 56 avec une portion verticale 57, une portion axiale 58 et un bout recourbé 59 qui vient s'appliquer, de l'autre côté du pivot 50, contre la crémaillère mobile 42, qui est munie d'une rainure 51 dans laquelle se loge la portion axiale 58 dudit prolongement 56.

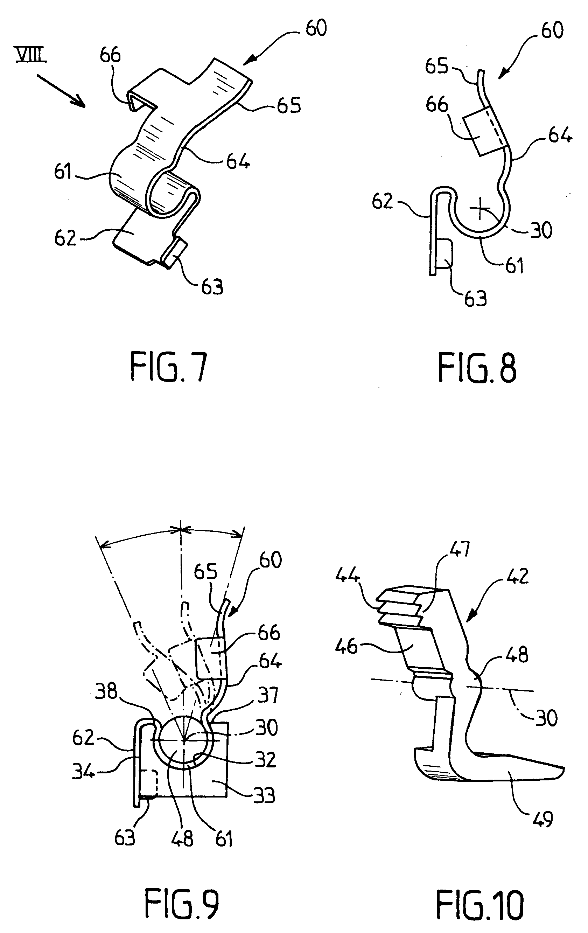

L'élément élastique représenté sur les figures 7, 8 et 9 est un ressort 60.

Le ressort 60 est constitué par une tôle élastique conformée suivant les figures 7, 8 et 9. Ledit ressort 60 comporte une portion circulaire 61 agencée de manière à être disposée entre le logement cylindrique d'articulation 32 appartenant à la came fixe 21 et la portion cylindrique 48 de la crémaillère mobile 42.

Ladite portion circulaire 61 a une de ses extrémités, qui est constituée par un prolongement 62 qui épouse et s'applique contre une face externe 34 de la came fixe 21, avec un élément latéral recourbé 63 qui s'applique contre ladite came fixe 21, du côté du montant 11, pour le maintien dudit ressort 60. Ladite portion circulaire 61 a l'autre extrémité qui est constituée par une portion centrale 64 avec un prolongement recourbé 65 agencé pour s'appliquer contre la crémaillère mobile 42 et avec un élément latéral recourbé 66 qui s'applique contre ladite crémaillère mobile 42 pour son maintien axial.

Ainsi, la crémaillère mobile 42 possède deux positions de fonctionnement : une position verrouillée et une position déverrouillée. Le passage d'une position à l'autre s'effectue par une rotation suivant l'axe 5. En position verrouillée, les dents 44 de la crémaillère mobile 42 sont en contact avec les dents 43 de la crémaillère fixe 40 ou 41. En position déverrouillée, le bras 49 de la crémaillère mobile 42 est positionné par le doigt 39 de déverrouillage, et les dents 44 de la crémaillère mobile 42 ne sont plus en contact avec les dents 43 de la crémaillère fixe 40 ou 41.

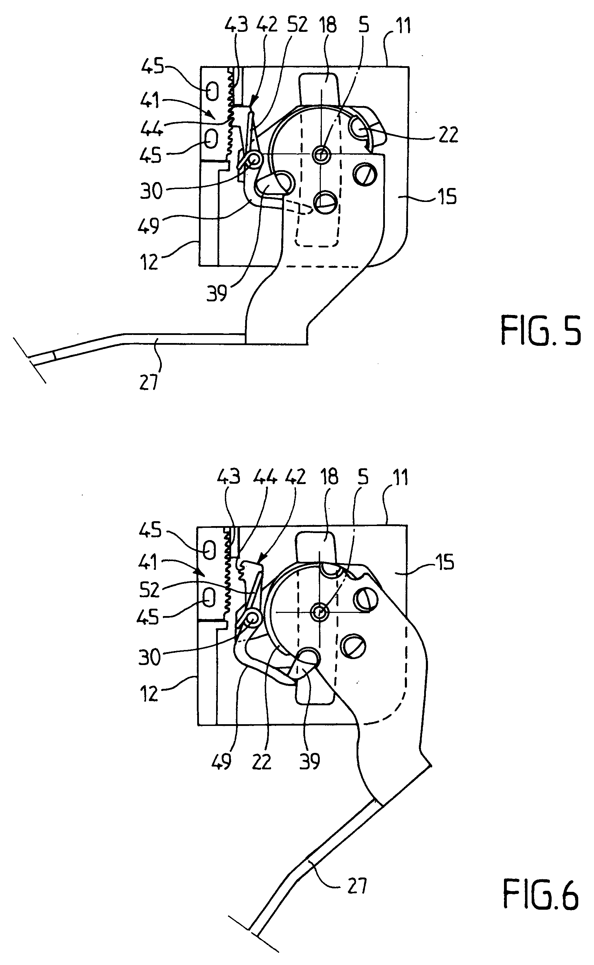

Dans la position verrouillée représentée sur la figure 5, la came mobile 22 est orientée de sorte que le doigt 39 de déverrouillage ne soit pas en contact avec la crémaillère mobile 42. Le ressort 52 ou 60 applique un effort sur la crémaillère mobile 42, de sorte que les dents 44 soient plaquées sur les dents 43 de la crémaillère fixe 40 ou 41.

En cas de choc sur le volant, ce mécanisme ainsi positionné interdit la remontée du volant. Les efforts verticaux d'environ 2500 Newton engendrés par le choc passent par la came fixe 21, la crémaillère mobile 42, la crémaillère fixe 40 ou 41 et le montant 11. L'axe 30 de la crémaillère mobile 42 étant excentré par rapport à l'axe 5 de rotation des cames 21 et 22, l'effort passant par la crémaillère mobile 42 induit un couple dans la came fixe. Ce couple est contré par le tenon 31 d'antirotation.

Dans le cas d'un positionnement des crémaillères fixe 40 ou 41 et mobile 42 en dents sur dents, les sommets des dents 44 sont en appui sur les sommets de dents 43. L'effort vertical du choc va engendrer un glissement vertical d'une demi dent, de la crémaillère mobile 44 et des cames 21 et 22. Le ressort 52 ou 60 qui contraint la denture 44 sur la denture 43 permet aux deux pièces de s'engrener et de stopper le déplacement du mécanisme.

On remarque que, avec ce système, le serrage en dents sur dents est sans incidence sur le couple de mise en rotation de la came mobile 22.

Dans la position déverrouillée représentée sur la figure 6, le passage de la position verrouillée à la position déverrouillée se réalise par rotation de la came mobile 22 effectuée par la poignée de manoeuvre 27. Lors de cette rotation, le doigt 39 de déverrouillage vient en contact avec le bras 49 de la crémaillère mobile 44 et écarte celui-ci de l'axe 5 de rotation des cames 21 et 22. Ce déplacement engendre une rotation de la crémaillère mobile suivant l'axe de rotation 30. Le mécanisme est en position déverrouillée lorsque les dentures 43 et 44 ne sont plus engrenées.

Dans cette position, le mouvement vertical des cames 21 et 22 par rapport au montant 11 est possible.

## Revendications

1. Dispositif de blocage vertical d'une colonne de direction de véhicule automobile, ladite colonne de direction étant constituée par un arbre de direction (1) monté tournant autour d'un axe de direction (3) dans un tube-corps (2), ledit tube-corps (2) étant relié à un ensemble support (6) fixé à la structure du véhicule, ladite colonne de direction étant réglable en hauteur ou en hauteur et en profondeur, avec un système de serrage (4) suivant un axe de serrage (5), qui est sensiblement perpendiculaire au plan vertical (8) passant par l'axe de direction (3),
le système de serrage (4) comportant une tige de serrage (7) sur laquelle sont montés un élément de tenue axiale (28, 29) à chaque extrémité et un ensemble de blocage (20) muni d'une poignée de manoeuvre (27), l'ensemble support (6) comportant au moins un montant (11) sensiblement parallèle au plan vertical (8), le tube-corps (2) et l'élément de tenue axiale (28) correspondant étant disposés du même côté du montant (11), l'ensemble de blocage (20), la poignée de manoeuvre (27) et l'élément de tenue axiale (29) correspondant étant disposés de l'autre côté du montant (11), **caractérisé en ce que** :
- l'ensemble de blocage (20) comporte, par rapport à l'axe de serrage (4), un élément fixe (21) et un élément mobile (22) en rotation, ledit élément fixe (21) est disposé contre une face externe (15) du montant (11), et il coopère par sa face transversale externe (24) avec la face transversale interne (25) dudit élément mobile (22), qui est solidaire en rotation avec la poignée de manoeuvre (27) sur laquelle s'applique l'élément de tenue axiale (29) correspondant ;
- une crémaillère fixe (40, 41) est agencée sur une aile (12) du montant (11), ladite aile (12) étant sensiblement verticale et perpendiculaire audit montant (11) ;
- une crémaillère mobile (42) est disposée face à la crémaillère fixe (40, 41) et elle est reliée à l'élément fixe (21) de l'ensemble de blocage (20) ;
- la crémaillère mobile (42) a deux positions :
. une position de blocage dans laquelle la crémaillère mobile (42) est engagée dans la crémaillère fixe (40, 41), lorsque le système de serrage (4) est en position verrouillée,
. une position libre dans laquelle la crémaillère mobile (42) est dégagée de la crémaillère fixe (40, 41), lorsque le système de serrage (4) est en position déverrouillée ;
- les deux positions de la crémaillère mobile (42) étant données par l'action de l'élément mobile (22) de l'ensemble de blocage (20) sur ladite crémaillère mobile (42) ;
- un élément élastique (52, 60) est monté sur l'élément fixe (21) de l'ensemble de blocage (20), il s'applique sur la crémaillère mobile (42) suivant le sens de la pénétration dans la crémaillère fixe (40, 41), et il garantit le blocage vertical quelle que soit la position relative des deux crémaillères l'une par rapport à l'autre tout en ayant aucune influence sur l'effort de verrouillage.

2. Dispositif de blocage vertical selon la revendication 1, **caractérisé en ce que** :
- la crémaillère mobile (42) est montée et s'articule à la périphérie de l'élément fixe de blocage (21) ;
- la crémaillère mobile (42) est munie d'un bras (49), qui est poussé par un doigt (39) agencé à la périphérie de l'élément mobile de blocage (22), de façon à dégager la crémaillère mobile (42) de la crémaillère fixe (40, 41) lorsque la poignée de manoeuvre (27) est placée en position déverrouillée ;
- l'élément élastique est constitué par un ressort (52, 60), qui est monté autour de l'articulation de la crémaillère mobile (42) et prend appui sur l'élément fixe de blocage (21) de manière :
. à engager la crémaillère mobile (42) dans la crémaillère fixe (40, 41) lorsque la poignée de manoeuvre (27) est mise en position verrouillée,
. à équilibrer l'action du doigt (39) sur le bras (49) en position déverrouillée.

3. Dispositif de blocage selon l'une des revendications 1 et 2, **caractérisé en ce que** :
- l'élément fixe de l'ensemble de blocage (20) est constitué par une came fixe (21) en rotation liée au montant (11) de l'ensemble support (6), ladite came fixe (21) comportant à sa périphérie un logement cylindrique d'articulation (32) de la crémaillère mobile (42) ;
- l'élément mobile de l'ensemble de blocage (20) est constitué par une came mobile (22) qui est munie à sa périphérie du doigt (39) assurant le déverrouillage.

4. Dispositif de blocage selon la revendication 3, **caractérisé en ce que** la crémaillère mobile (42) est constituée par un corps (46) qui est muni :
. à une de ses extrémités d'une portion dentée (47) avec des dents (44) agencées pour coopérer avec des dents (43) agencées sur la crémaillère fixe (40, 41), et
. à l'autre extrémité d'un élément d'articulation (48), qui est agencé pour pivoter dans le logement cylindrique d'articulation (32) appartenant à la came fixe (21) et qui porte le bras de dégagement (49) de la crémaillère mobile (22).

5. Dispositif de blocage selon la revendication 4, **caractérisé en ce que** :
- la crémaillère mobile (42) comporte un élément d'articulation (48), qui est constitué par une portion cylindrique prolongeant le corps (46) de la crémaillère mobile (42) ;
- le logement cylindrique (32) appartenant à la came fixe (21) est constitué par une portion cylindrique dépassant cent quatre vingt degrés avec deux entrées recourbées (37) et (38), de manière à maintenir verticalement ladite crémaillère mobile (42).

6. Dispositif de blocage selon la revendication 5, **caractérisé en ce que** :
- le ressort (52) est constitué par un ensemble de spires (53) qui est monté sur un pivot (50) agencé à une des extrémités axiales de la portion cylindrique (48) de la crémaillère mobile (42), le pivot (50), la portion cylindrique (48) et le logement cylindrique (32) de la came fixe (21) ayant le même axe qui est l'axe d'articulation (30) ;
- l'ensemble des spires (53) a une de ses extrémités qui est constituée par un prolongement (54) avec un bout recourbé (55) qui s'engage dans un logement (36) aménagé dans la came fixe (21) pour bloquer ledit prolongement (54) qui se loge dans une rainure (35) de la came fixe (21) ;
- l'ensemble des spires (53) a l'autre extrémité qui est constituée par un prolongement (56) avec une portion verticale (57), une portion axiale (58) et un bout recourbé (59) qui vient s'appliquer, de l'autre côté du pivot (50), contre la crémaillère mobile (42), qui est munie d'une rainure (51) dans laquelle se loge la portion axiale (58) dudit prolongement (56).

7. Dispositif de blocage selon la revendication 5, **caractérisé en ce que** :
- le ressort (60) est constitué par une tôle élastique conformée suivant les figures 7, 8 et 9 ;
- ledit ressort (60) comporte une portion circulaire (61) agencée de manière à être disposée entre le logement cylindrique d'articulation (32) appartenant à la came fixe (21) et la portion cylindrique (48) de la crémaillère mobile (42) ;
- ladite portion circulaire (61) a une de ses extrémités qui est constituée par un prolongement (62) qui épouse et s'applique contre une face externe (34) de la came fixe (21), avec un élément latéral recourbé (63) qui s'applique contre ladite came fixe (21) du côté du montant (11) pour le maintien dudit ressort (60) ;
- ladite portion circulaire (61) a l'autre extrémité qui est constituée par une portion centrale (64) avec un prolongement recourbé (65) agencé pour s'appliquer contre la crémaillère mobile (42) et avec un élément latéral recourbé (66) qui s'applique contre ladite crémaillère mobile (42) pour son maintien axial.

8. Dispositif de blocage selon la revendication 1, **caractérisé en ce que** la crémaillère fixe (40) est réalisée sur l'aile (12) du montant (11).

9. Dispositif de blocage selon la revendication 1, **caractérisé en ce que** la crémaillère fixe (41) est montée sur l'aile (12) du montant (11) avec des moyens d'assemblage (45).

10. Dispositif de blocage selon l'une quelconque des revendications précédentes, **caractérisé en ce que** la came fixe (21), la came mobile (22), la crémaillère fixe (41) et la crémaillère mobile (42) sont réalisées en matière plastique.

11. Dispositif de blocage selon l'une quelconque des revendications 1 à 10, **caractérisé en ce que** la came fixe (21), la came mobile (22), la crémaillère fixe (41) et la crémaillère mobile (42) sont réalisées en acier fritté.
